# EUROPEAN PATENT APPLICATION

(11) **EP 4 848 776 A1**
(43) Date of publication of application: **02.12.2026**
(21) Application number: 24920409.0
(22) Date of filing: 23.01.2024
(51) Int. Cl.: H04W 16/04, H04W 16/08, H04W 28/084

(54) **COMMUNICATION CONTROL DEVICE AND COMMUNICATION SYSTEM**

(71) Applicant: 1FINITY INC., Kawasaki-shi, Kanagawa 211-8588 (JP)
(72) Inventor: YAMAMOTO, Kanta, Kawasaki-shi, Kanagawa 211-8588 (JP)
(74) Representative: Haseltine Lake Kempner LLP
(86) International application number: PCT/JP2024/001794
(87) International publication number: WO 2025/158519

(57) **Abstract**

A communication control apparatus includes, a demand predictor configured to generate a first demand model representing prediction of a first demand corresponding to first traffic and a second demand model representing prediction of a second demand corresponding to second traffic, a calculator configured to calculate allowable delay of the first traffic based on quality requested by the first traffic, a modificator configured to modify the first demand model within a range in which a shift amount of the first demand model does not exceed the allowable delay so as to increase a non-allocated section in which no resource is allocated to either the first traffic or the second traffic, and a resource allocator configured to allocate a first resource to the first traffic based on the modified first demand model and allocate a second resource to the second traffic based on the second demand model.

## Description

### TECHNICAL FIELD

The present invention relates to a communication apparatus, a communication control apparatus, a communication system, and a communication control method for radio communication.

### BACKGROUND ART

In a standardization organization such as 3rd Generation Partnership Project (3GPP) (registered trademark) or Open RAN (O-RAN) Alliance, there is a discussion about network energy saving (NES) of a radio access network (RAN). For example, in the O-RAN, in an O-RAN architecture in which an RAN intelligent controller (RIC) is introduced based on the 3GPP specification, it is expected to realize efficient power saving by collecting configuration information and statistical information regarding the RAN and user equipment (UE) via a standard interface and executing control according to a situation of the RAN.

Carrier and cell switch Off/On and an advanced sleep mode (ASM) are discussed as use cases for power saving of a radio access network. In the carrier/cell Off/On control, in a network in which a plurality of cells (or carriers) cover the same service area, some cells (or carriers) can be stopped according to a communication status. Accordingly, network energy saving is realized. The ASM control reduces power consumption by putting a part of functions of the radio apparatus in a sleep state during an unused period of radio resources (alternatively, the intermittent section) in units of symbols, slots, or frames according to a decrease in traffic. The length of the intermittent section is several microseconds in units of symbols (micro sleep), several milliseconds in units of slots (light sleep), and 100 milliseconds or more in units of frames (deep sleep). A technique for expanding the sleep time of the radio apparatus is described in, for example, Non-Patent Literature 1. Non-Patent Literatures 2 and 3 describe related arts.

### CITATION LIST

### NON-PATENT LITERATURE

Non-Patent Literature 1: O-RAN.WG3.UCR-R003-v04.00.05
Non-Patent Literature 2: 3GPP TS23.501 V18.4.0 (2023-12)
Non-Patent Literature 3: 3GPP TS28.541 V18.5.0 (2023-09)

### SUMMARY OF INVENTION

### PROBLEMS TO BE SOLVED BY THE INVENTION

In the ASM control, power consumption is reduced by putting some of the functions of the radio apparatus into a sleep state during an unused period of radio resources. Therefore, when the unused period of the radio resources becomes longer, power consumption is further reduced. However, in the techniques of the related art, an unused period of radio resources is not sufficiently expanded. That is, further power saving of the radio access network is expected.

An object according to one aspect of the present invention is to expand an unused period of radio resources in power saving of a radio access network.

### MEANS FOR SOLVING THE PROBLEMS

A communication control apparatus includes, a demand predictor configured to generate a first demand model representing prediction of a first demand corresponding to first traffic and a second demand model representing prediction of a second demand corresponding to second traffic, a calculator configured to calculate allowable delay of the first traffic based on quality requested by the first traffic, a modificator configured to modify the first demand model within a range in which a shift amount of the first demand model does not exceed the allowable delay so as to increase a non-allocated section in which no resource is allocated to either the first traffic or the second traffic, a resource allocator configured to allocate a first resource to the first traffic based on the modified first demand model and allocate a second resource to the second traffic based on the second demand model, and a resource controller configured to notify a communication apparatus processing the first traffic and the second traffic of the first resource and the second resource.

### ADVANTAGEOUS EFFECTS OF THE INVENTION

According to the foregoing aspects, further power saving of the radio access network is realized.

### BRIEF DESCRIPTION OF DRAWINGS

FIG. 1 is a diagram illustrating an example of a communication system according to an embodiment of the present invention.
FIGs. 2A to 2D are diagrams illustrating an example of the ASM control.
FIG. 3 is a diagram illustrating an example of function deployment related to NES/ASM control in the O-RAN architecture.
FIGs. 4A and 4B are diagrams illustrating an example of modification of the demand model.
FIGs. 5A to 5C are diagrams illustrating another example of the modification of the demand model.
FIGs. 6A and 6B are diagrams illustrating an example of a method of solving the problem of the case illustrated in FIG. 5.
FIGs. 7A to 7C are diagrams illustrating an example of a process of shifting a communication section corresponding to traffic on a time axis.
FIG. 8 is a diagram illustrating an example of a functional configuration of the communication system according to the embodiment of the present invention.
FIGs. 9A and 9B are diagrams illustrating an example of a process of allocating a resource to traffic based on the demand model.
FIG. 10 is a flowchart illustrating an example of a communication control method according to an embodiment of the present invention.
FIG. 11 is a diagram illustrating a configuration of a communication system according to an example of the present invention.
FIG. 12 is a diagram illustrating an example of a traffic demand predicted in advance.
FIG. 13 is a diagram illustrating an example of traffic load prediction.
FIGs. 14A to 14C are diagrams illustrating an example of a method of modifying a demand model.
FIG. 15 is a diagram illustrating RRMPolicyRatio.
FIG. 16 is a diagram illustrating an example of a sequence of communication control according to an embodiment of the present invention.
FIG. 17 is a diagram illustrating an example of a hardware configuration of the real time RIC that operates as the communication control apparatus.

### DESCRIPTION OF EMBODIMENTS

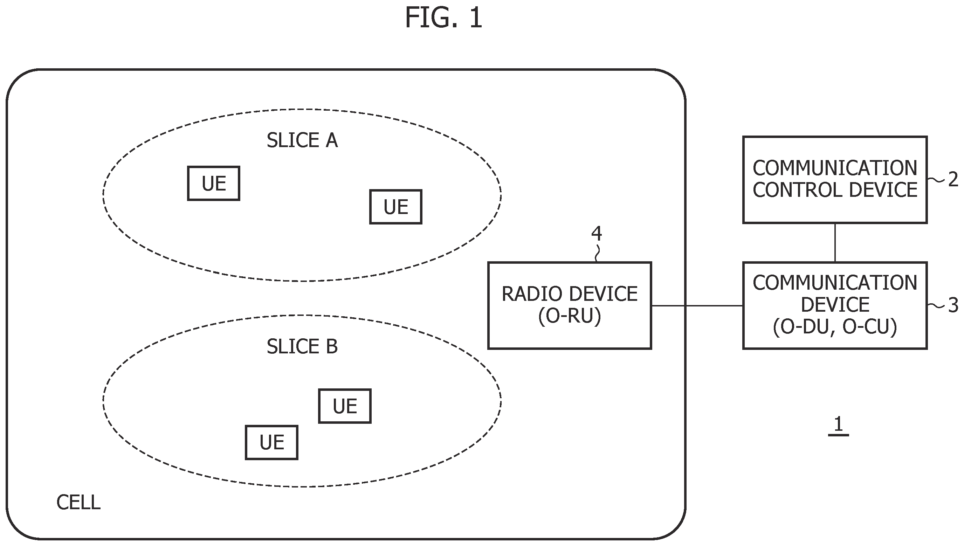

FIG. 1 illustrates an example of a communication system according to an embodiment of the present invention. In this example, a communication system 1 includes a communication control apparatus 2, a communication apparatus 3, and a radio apparatus 4 to form a radio access network. The communication control apparatus 2, the communication apparatus 3, and the radio apparatus 4 are included in a base station system. The base station system is not particularly limited, but is, for example, a next generation NodeB (gNB) or a new radio (NR) base station.

The communication control apparatus 2 controls communication by the communication apparatus 3 and the radio apparatus 4 by executing one or a plurality of application programs. The communication apparatus 3 transmits data to a terminal user equipment (UE) using the radio apparatus 4, and receives data from the terminal UE using the radio apparatus 4. The communication apparatus 3 may measure a parameter (for example, the delay time) related to communication of the radio access network and notify the communication control apparatus 2 of the parameter. In this case, the communication control apparatus 2 may control communication of a radio access network based on measurement by the communication apparatus 3. The radio apparatus 4 includes a radio circuit and an antenna, and executes radio communication with the terminal UE via a radio link. In the O-RAN architecture, the communication apparatus 3 corresponds to an E2 node including an O-RAN central unit (O-CU) and an O-RAN distributed unit (O-DU), and the radio apparatus 4 corresponds to an O-RAN radio unit (O-RU).

The communication system 1 provides a cell for accommodating the terminal UE. The communication system 1 can set a plurality of RAN slices in a cell. The plurality of RAN slices are virtual networks independent of each other. Each RAN slice is identified by, for example, single network slice selection assistance information (S-NSSAI). Then, the communication system 1 can set different quality of service (QoS) for each RAN slice. For example, an allowable delay time is set in each RAN slice. In the following description, the RAN slice may be simply referred to as a "slice".

The communication control apparatus 2 controls the communication apparatus 3 and the radio apparatus 4, and executes control related to power saving (network energy saving (NES)) of the radio access network. Specifically, the communication control apparatus 2 executes advanced sleep mode (ASM) control as single NES control. When the traffic volume decreases, some of the functions of the radio apparatus 4 are set in a sleep state in units of symbols, slots, or frames in a section (alternatively, an intermittent section) in which the radio resources of the communication system 1 are not allocated to any traffic in the ASM control. In this procedure, power consumption of the radio apparatus 4 is reduced.

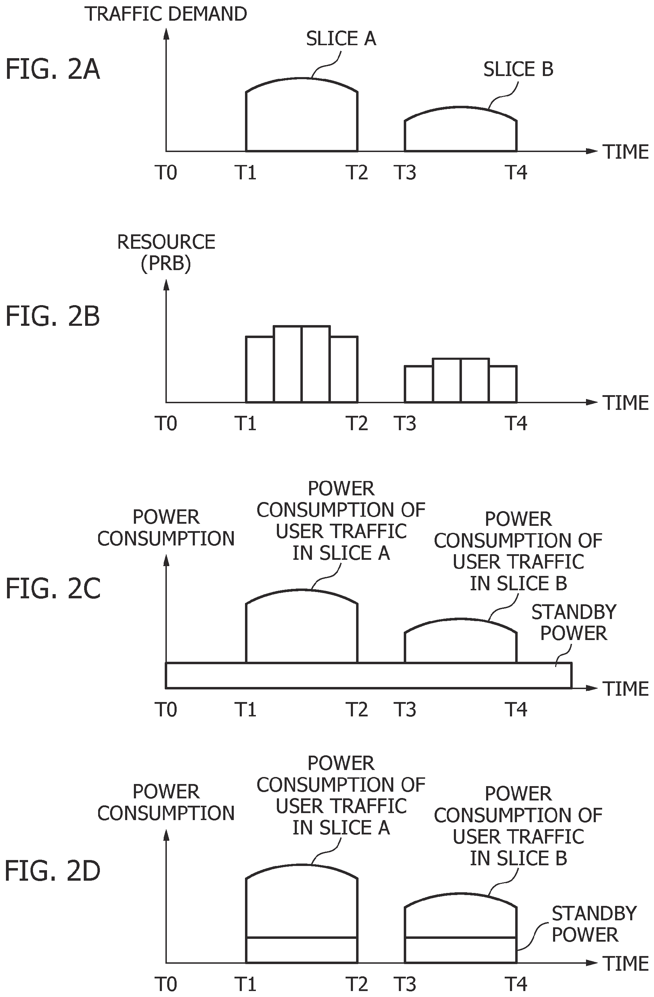

FIG. 2 illustrates an example of the ASM control. In the present example, slices A and B are set in the cell. Then, the communication control apparatus 2 predicts a traffic demand of each slice. In the present example, as illustrated in FIG. 2A, it is predicted that traffic of the slice A is generated in a section from T1 to T2, and traffic of the slice B is generated in a section from T3 to T4.

The communication control apparatus 2 allocates a resource to each slice based on the traffic demand prediction. In the example illustrated in FIG. 2B, allocation of a sufficient amount of each of physical resource blocks (PRBs) to each of traffic demands of the slices A and B is optional. One physical resource block includes, for example, twelve subcarriers (frequencies).

FIG. 2C illustrates power consumption of the radio apparatus 4 with respect to the traffic demand illustrated in FIG. 2A. Standby power occurs when a physical resource block PRB is in an active state. That is, the standby power is proportional to the number of physical resource blocks PRBs in the active state. In addition, power for processing user traffic is consumed. That is, power for transmitting or receiving radio signals is consumed. Accordingly, power for processing the user traffic of the slice A is consumed in a section from T1 to T2, and power for processing the user traffic of the slice B is consumed in a section from T3 to T4.

Here, the communication control apparatus 2 deactivates each physical resource block PRB in a section in which there is no traffic demand by the ASM control. In the present example, each physical resource block PRB is deactivated in the sections of T0 to T1 and T2 to T3. When the physical resource block PRB is deactivated, at least some of the circuits or functions of the radio apparatus 4 are stopped. That is, in a section in which the physical resource block PRB is deactivated, at least some of the circuits or the functions of the radio apparatus 4 are stopped. As a result, in the section in which the physical resource block PRB is deactivated, power consumption of the radio apparatus 4 is reduced. In the example illustrated in FIG. 2D, the standby power is reduced in the sections of T0 to T1 and T2 to T3.

As described above, the communication control apparatus 2 reduces the power consumption of the radio apparatus 4 by stopping some of the circuits or the functions of the radio apparatus 4 in the section where there is no traffic demand by the ASM control. Here, as the section in which there is no traffic demand is longer, a reduction amount of power consumption increases. Accordingly, in an embodiment of the present invention, communication is controlled such that the section in which there is no traffic demand becomes long while taking service quality into consideration. In the section where there is no traffic demand, non-allocation of a resource to each slice is optional. Therefore, in the following description, a section in which there is no traffic demand may be referred to as a "non-traffic section" or a "non-allocated section".

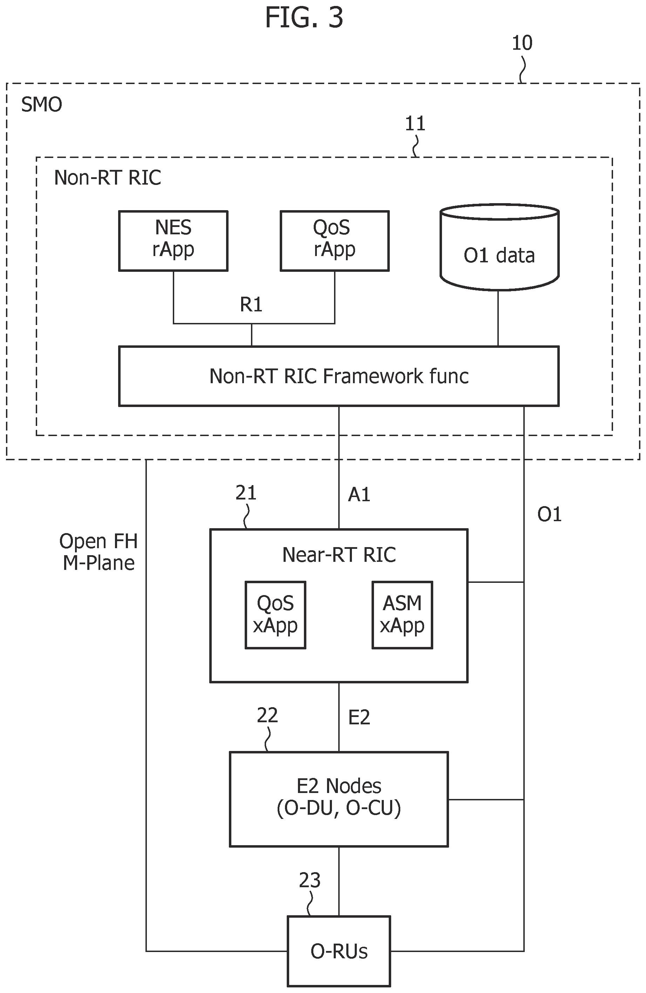

FIG. 3 illustrates an example of function deployment related to NES/ASM control in the O-RAN architecture. In the present example illustrated in FIG. 3, the communication system 1 related to NES/ASM control includes a service management orchestration (SMO) 10, an E2 node 22, and an O-RU 23.

The SMO 10 is an example of a communication management apparatus and manages each apparatus or each function in the O-RAN architecture. The SMO 10 is connected to the E2 node 22 and the O-RU 23 via an O1 interface. The SMO 10 is connected to the O-RU 23 via an open fronthaul interface. The SMO 10 may collect configuration information and statistical information of the radio access network via the O1 interface or the open fronthaul interface. The SMO 10 can transmit an instruction to change the configuration of the E2 node 22 via the O1 interface. Further, the SMO 10 can control an operation of the O-RU 23 via the open fronthaul interface.

The O-RAN architecture includes a RAN intelligent controller (RIC). The RIC provides a service to each apparatus or each function in the O-RAN architecture. Here, the RIC includes a non-real time RIC 11 and a real time (near-real) time RIC 21. The non-real time RIC 11 is mounted inside the SMO 10 and the real time RIC 21 is provided outside of the SMO 10. The non-real time RIC 11 and the real time RIC 21 are connected by an A1 interface. The A1 interface includes A1-P and A1-EI.

The non-real time RIC 11 includes a non-real time RIC framework. The application related to the NES control operates on the non-real time RIC framework. In this example, an NES application and a QoS guarantee application are implemented. The application program operating in the non-real time RIC 11 may be referred to as "rApp".

The NES application executes a learning process by acquiring configuration information and statistical information of a radio access network collected by the SMO 10 and giving the information to an artificial intelligence (AI)/machine learning (ML) model. The NES application updates the AI/ML model. Further, the NES application estimates optimum configuration information of the E2 node using the AI/ML model. The QoS application guarantees the quality of each slice.

In this way, the non-real time RIC 11 collects various types of data accumulated in the E2 node 22 via the O1 interface. The non-real time RIC 11 determines optimal parameters according to a radio environment and traffic demand using the AI/ML model, and gives the parameters to the E2 node via the O1 interface. Further, the non-real time RIC 11 generates a policy related to control of the radio access network and notifies the real-time RIC 21 of the policy via the A1 interface.

The real-time RIC 21 is an example of the communication control apparatus 2 illustrated in FIG. 1, and collects and analyzes the configuration information and statistical information of the radio access network from the E2 node 22 via the E2 interface. The real time RIC 21 controls the E2 node according to the policy of which the non-real time RIC 11 notifies.

An ASM application and a QoS guarantee application are implemented on the real-time RIC 21. The ASM application controls the radio access network by acquiring configuration information and statistical information of the radio access network and giving the information to the AI/ML model. This AI/ML model is not particularly limited, but is updated by, for example, the non-real time RIC 11. Then, the ASM application predicts a traffic demand of each slice using the AI/ML model, and allocates a resource to each slice based on the prediction. The QoS guarantee application executes resource allocation in consideration of quality (for example, a delay) of each slice. The application program operating in the real time RIC 21 may be referred to as "xApp".

The E2 node 22 is an example of the communication apparatus 3 illustrated in FIG. 1 and includes an O-CU and an O-DU. The E2 node 22 provides radio link control, media access control, a PHY-High function, and the like and processes signals of the O-RU 23 in an upper layer. A plurality of O-RUs 23 can be connected to the O-DU. The E2 node 22 may also acquire and provide configuration information and statistical information of the radio access network to the real-time RIC 21.

The O-RU 23 is an example of the radio apparatus 4 illustrated in FIG. 1, includes a radio circuit, and can accommodate a plurality of terminal UEs. The O-RU 23 transmits a report related to power saving of the radio access network to the SMO 10 via the M plane of the O1 interface or the open fronthaul interface. The O-RU 23 executes on/off control of a cell or a carrier in response to an NES instruction received from the SMO 10 via the M plane of the O1 interface or the open fronthaul interface. Then, the O-RU 23 executes radio communication in response to an instruction given from the E2 node (here, O-DU). At this time, the O-RU 23 may stop some functions of the radio circuit in a non-traffic section.

The A1 interface connects the non-real time RIC 11 to the real-time RIC 21. The E2 interface connects the real time RIC 21 to the E2 node 22. The R1 interface connects the non-real time RIC framework to the rApp.

In the O-RAN architecture that has the above configuration, the real-time RIC 21 operating as the communication control apparatus executes power saving (here, an ASM) of the radio access network based on the prediction of the traffic demand of each slice. At this time, the real-time RIC 21 expands the non-traffic section while taking the quality of each slice into consideration. Accordingly, the power consumption of the O-RU 23 is reduced.

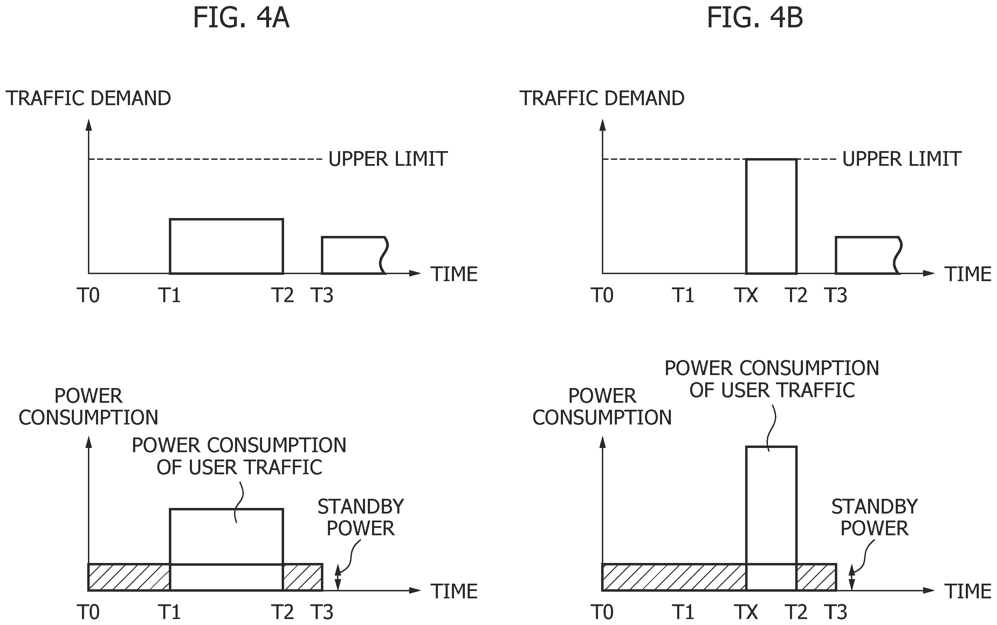

FIG. 4 illustrates an example of modification of the demand model. In the present example, as illustrated in FIG. 4A, it is predicted that user traffic occurs in a section from T1 to T2. It is predicted that other traffic will occur after a time T3. That is, it is predicted that there is no traffic demand in sections of T0 to T1 and T2 to T3. In this case, it is predicted that standby power and power for processing user traffic are consumed in the section from T1 to T2. On the other hand, in the sections of T0 to T1 and T2 to T3, some of the circuits or the functions of the radio apparatus 4 are controlled to the sleep state by the ASM control. As a result, power consumption represented by a shaded area in FIG. 4A is reduced. Description of the power consumption after time T3 is omitted.

In an embodiment of the present invention, the demand model is modified such that a communication section corresponding to the predicted traffic demand is shortened. In the present example, as illustrated in FIG. 4B, the demand model is modified such that the user traffic is not transmitted in a section from T1 to TX and the user traffic is transmitted in a section from TX to T2. Here, the section from TX to T2 illustrated in FIG. 4B is shorter than a section from T1 to T2 illustrated in FIG. 4A. A total traffic volume in the section from T1 to T2 illustrated in FIG. 4A is the same as a total traffic volume in the section from TX to T2 illustrated in FIG. 4B. Accordingly, a resource amount used in the section from TX to T2 illustrated in FIG. 4B is greater than a resource amount used in the section from T1 to T2 illustrated in FIG. 4A.

The communication section can be shortened using more resources. Here, the resource that can be provided by the communication system 1 has a predetermined upper limit (capability limit). Accordingly, the communication system 1 may modify the demand model so that the resource allocated to the user traffic approaches the predetermined upper limit.

In the communication system 1, as described above, the ASM control is executed. As a result, in the case illustrated in FIG. 4A, the section from T0 to T1 and the section from T2 to T3 are non-traffic sections, and the power consumption of the radio apparatus is reduced in these sections. On the other hand, in the case illustrated in FIG. 4B, in addition to the section from T0 to T1 and the section from T2 to T3, the section from T1 to TX is also a non-traffic section. That is, the power consumption of the radio apparatus is reduced in the section from T0 to TX and the section from T2 to T3. In this way, power consumption is further reduced by modifying the predicted traffic demand model.

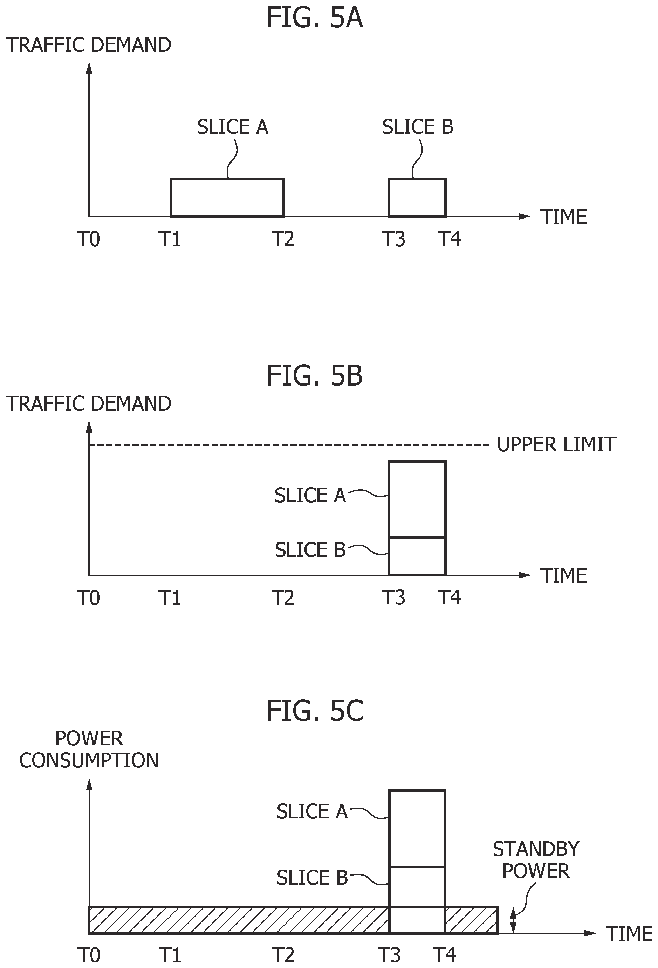

FIG. 5 illustrates another example of the modification of the demand model. In this embodiment, as illustrated in FIG. 5A, the traffic demand of the slice A is predicted in the section from T1 to T2, and the traffic demand of the slice B is predicted in the section from T3 to T4. Here, in order to increase the reduction amount of the power consumption by the ASM control, the non-traffic section may be expanded. Then, in order to expand the non-traffic section, it is preferable that the communication section corresponding to the traffic of the slice A and the communication section corresponding to the traffic of the slice B overlap as much as possible.

Thus, as illustrated in FIG. 5B, the demand model is modified so that the communication section corresponding to the traffic of the slice A overlaps the communication section corresponding to the traffic of the slice B. At this time, in the present example, the traffic demand model of the slice A is modified so that a length of the communication section corresponding to traffic of the slice A is the same as a length of the communication section corresponding to traffic of the slice B. The traffic demand of the slice A is deployed in the section from T3 to T4.

In this case, as illustrated in FIG. 5C, in addition to the section from T0 to T1 and the section from T2 to T3, the section from T1 to T2 is also a non-traffic section. Accordingly, the power consumption of the radio apparatus is reduced in a section from T0 to T3 by the ASM control.

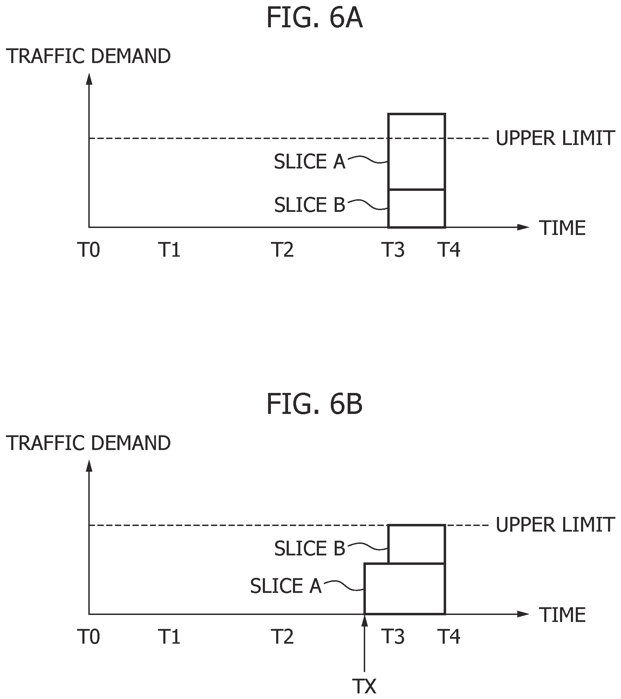

In this way, in the embodiment of the present invention, the non-traffic section is expanded by overlapping the traffic demands of the plurality of slices. However, the traffic volume does not exceed the upper limit of the communication system. For example, when traffic demands of the slices A and B overlap each other, as illustrated in FIG. 6A, a sum of the traffic volumes is not allowed to exceed an upper limit of the communication system. Accordingly, the demand model of the traffic A is modified so that the sum of the traffic volumes of the slices A and B does not exceed the upper limit. In this case, the traffic demand of the slice A is allocated to a section from TX to T4.

As described above, in order to improve NES efficiency (that is, efficiency of power saving), the non-traffic section may be expanded. In order to expand the non-traffic section, in the ASM control illustrated in FIGS. 5 and 6, a communication section corresponding to a traffic demand of any slice (for example, the slice A) is shifted by a predetermined time on the time axis.

On the other hand, in order to guarantee quality of service (QoS), a maximum value of a delay time is defined for each slice according to a type of traffic. Accordingly, the communication section corresponding to the traffic demand is shifted on the time axis in consideration of a prescribed maximum delay time.

The maximum delay time of the traffic is not particularly limited, but is represented by, for example, a packet delay budget (PDB). Here, the maximum delay time of the traffic is requested by a service level agreement (SLA) corresponding to the type of traffic. The traffic is classified into, for example, a guaranteed bit rate (GBR) traffic, a non-GBR traffic, or a delay critical GBR. An allowable packet delay PDB for GBR traffic is 50 to 500 milliseconds. An allowable packet delay PDB of the non-GBR traffic is 10 to 1100 milliseconds. The allowable packet delay PDB for the delay critical GBR is 5 to 30 milliseconds. The allowable packet delay PDB is an example of a maximum delay time defined for traffic or a slice and is represented by a 5QI value (3GPP TS23.501 V18.4.0, 5.7.4).

In this way, GBR traffic and non-GBR traffic have a relatively large maximum delay time (alternatively, the allowable packet delay PDB) of traffic. Accordingly, in the embodiment of the present invention, in the ASM control, it is assumed that communication sections corresponding to the GBR traffic and the non-GBR traffic can be shifted. In the following description, the GBR traffic or the non-GBR traffic may be referred to as "GBR/non-GBR traffic". Conversely, the maximum delay time of the delay critical GBR traffic is relatively small. Accordingly, in the ASM control, the communication section corresponding to the delay critical GBR traffic is not shifted.

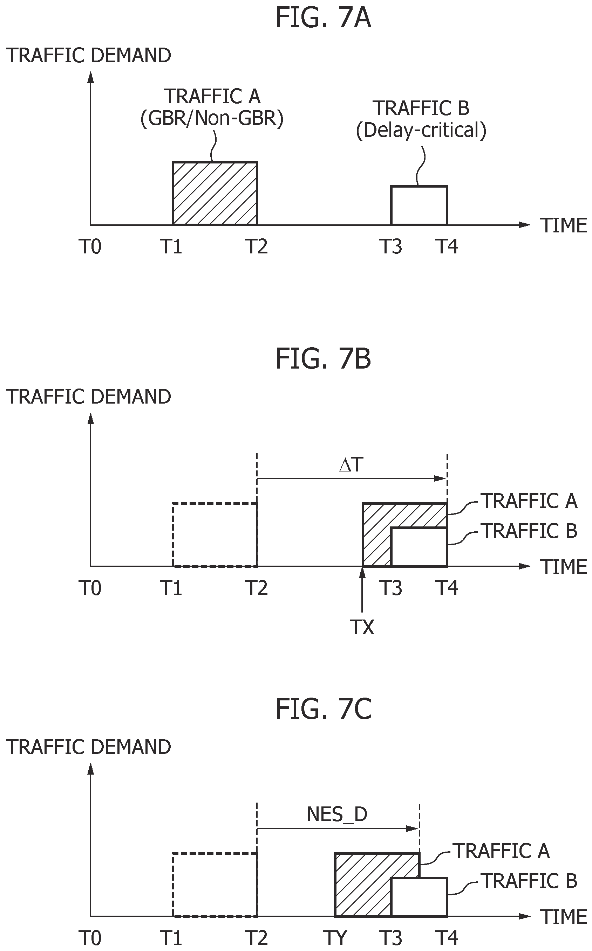

FIG. 7 illustrates an example of a process of shifting a communication section corresponding to traffic on a time axis. In this example, as illustrated in FIG. 7A, a demand for the traffic A is predicted in the section from T1 to T2, and a demand for the traffic B is predicted in the section from T3 to T4. It is assumed that the traffic A is GBR/Non-GBR traffic and the traffic B is delay critical GBR traffic.

Here, in order to expand the non-traffic section, it is preferable that the communication section from the traffic A and the communication section from the traffic B overlap each other for a long time. For example, in the case illustrated in FIG. 7B, the communication section from the traffic A is shifted on the time axis such that the end of the communication section from the traffic A matches the end of the communication section from the traffic B. In this case, the section from T0 to TX is a non-traffic section.

Here, a shift amount ΔT is set so as not to exceed an allowable delay for the NES control determined based on the maximum delay time (alternatively, the allowable packet delay PDB) of the traffic A. Here, the allowable delay NES_D for the NES control is expressed by the following Formula (1) or (2). $NES_D = PDB - maximum delay measurement value - α$ (1) $NES_D = PDB - average delay measurement value - β$ (2)

The PDB is an allowable packet delay time and is determined in advance according to a type of traffic. The delay measurement value represents a packet propagation delay time between the terminal UE and a user plane function (UPF) or a packet propagation delay time between the terminal UE and the O-CU. The packet propagation delay time is measured by, for example, the O-CU. The maximum delay measurement value represents a maximum value of the measured packet propagation delay time. The average delay measurement value represents an average value of the measured packet propagation delay time. Each of α and β represents a margin in consideration of fluctuation of prediction using the AI/ML model.

In the embodiment of the present invention, a communication section of traffic is shifted on the time axis within a range not exceeding the above-described allowable delay NES_D for the NES control. In the example illustrated in FIG. 7C, the communication section corresponding to the traffic A is shifted by the allowable delay NES_D for the NES control. In this case, the section from T0 to TY is a non-traffic section. That is, the power consumption in the section from T0 to TY is reduced by the ASM control. At this time, delay of the traffic A does not exceed the allowable packet delay PDB even in consideration of the packet propagation delay time and the predetermined margin. Accordingly, quality of a service requested for the traffic A is guaranteed.

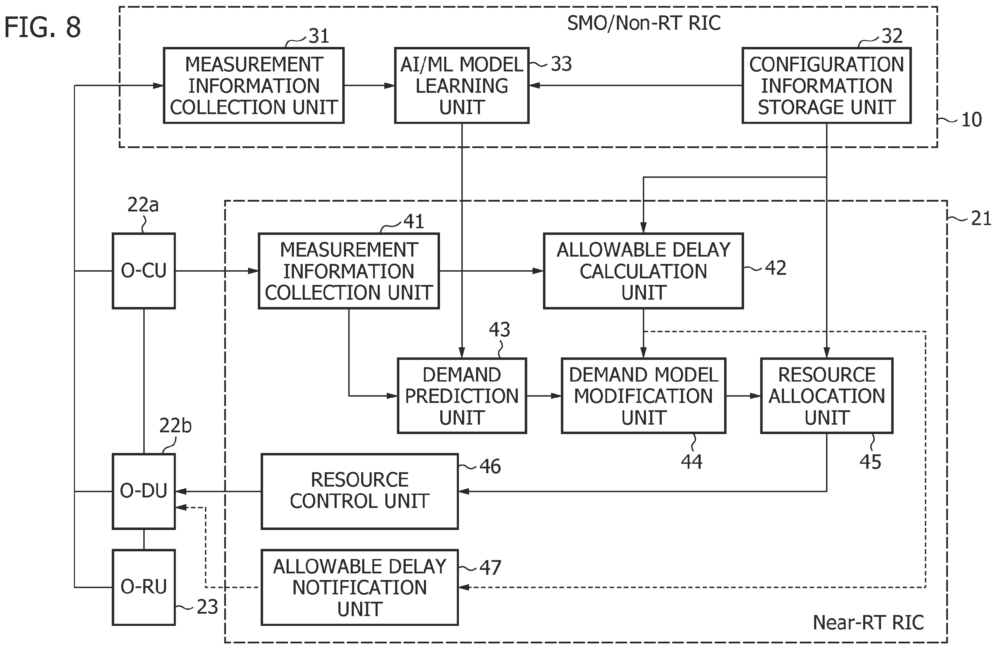

FIG. 8 illustrates an example of a functional configuration of the communication system 1 according to the embodiment of the present invention. The communication system 1 includes the SMO 10, the real-time RIC 21, an O-CU 22a, an O-DU 22b, and an O-RU 23. The SMO 10 includes the non-real time RIC 11 illustrated in FIG. 3. The O-CU 22a and the O-DU 22b form the E2 node illustrated in FIG. 3.

The SMO 10 includes a measurement information collection unit 31, a configuration information storage unit 32, and an AI/ML model learning unit 33. The measurement information collection unit 31, the configuration information storage unit 32, and the AI/ML model learning unit 33 are realized by, for example, a non-real time RIC.

The measurement information collection unit 31 collects measurement information related to the radio access network from the O-CU 22a, the O-DU 22b, and the O-RU 23 via the O1 interface. The measurement information includes, for example, information indicating a load of a cell and a measurement report related to power saving.

The configuration information storage unit 32 stores configuration information of each slice set in the radio access network. The configuration information includes identification information for identifying each slice and information related to service level agreement (SLA) of each slice. The information related to the SLA may include the above-described allowable packet delay PDB.

The AI/ML model learning unit 33 updates the AI/ML model that predicts a traffic demand of each slice. Here, the AI/ML model learning unit 33 updates the AI/ML model using the measurement information collected by the measurement information collection unit 31 and the configuration information stored in the configuration information storage unit 32. The updated AI/ML model is deployed and provided to the real time RIC 21 via the O1/A1 interface.

The real time RIC 21 includes a measurement information collection unit 41, an allowable delay calculation unit 42, a demand prediction unit 43, a demand model modification unit 44, a resource allocation unit 45, a resource control unit 46, and an allowable delay notification unit 47. The real time RIC 21 may further include other functions not illustrated in FIG. 8.

The measurement information collection unit 41 collects measurement information related to each slice of the radio access network from the O-CU 22a via the E2 interface. The measurement information includes information indicating a packet propagation delay time between the terminal UE and a user plane function (UPF) or a packet propagation delay time between the terminal UE and the O-CU 22a. The packet propagation delay time is measured by the O-CU 22a.

The measurement of the packet propagation delay is described in 3GPP TS28.552. Downlink packet delay from the UPF to the radio access network is described in 5.1.1.1.8.2. Downlink packet delay from the O-CU to the terminal UE is described in 5.1.1.1.6. Uplink packet delay from the terminal UE to the O-CU is described in 5.1.1.1.7.

The allowable delay calculation unit 42 calculates the allowable delay for the NES control in each slice. Here, in a case where one piece of traffic is transmitted using one slice, the allowable delay for the NES control is calculated for each piece of traffic. The allowable delay (NES_D) for the NES control is calculated based on the following Formula (1) or (2). $NES_D = PDB - maximum delay measurement value - α$ (1) $NES_D = PDB - average delay measurement value - β$ (2)

The allowable packet delay PDB is stored in the configuration information storage unit 32 for each slice. Here, the allowable packet delay PDB of each slice is determined in advance for a type of traffic transmitted using the slice. A maximum delay measurement value or an average delay measurement value is calculated based on continuation information collected by the measurement information collection unit 41. That is, a maximum value among the plurality of delay measurement values or an average value of the plurality of delay measurement values is calculated. Each of α and β represents a margin in consideration of fluctuation of demand prediction using the AI/ML model. Accordingly, α and β are determined in advance, for example, by simulation or the like.

The demand prediction unit 43 generates a demand model representing prediction of a traffic demand in each slice. Specifically, the demand prediction unit 43 generates a demand model of each slice using the AI/ML model trained in the SMO 10. At this time, the demand prediction unit 43 may generate the demand model of each slice using the measurement information collected by the measurement information collection unit 41. The demand model includes information indicating a communication section in which traffic is transmitted (or received) and information indicating a traffic volume in the communication section. The communication section may be represented by a communication start time and a communication end time.

The demand model modification unit 44 modifies the demand model generated by the demand prediction unit 43. At this time, the demand model modification unit 44 modifies the demand model with reference to the allowable delay for the NES control calculated by the allowable delay calculation unit 42.

Specifically, when the first demand model representing the prediction of the first demand corresponding to first traffic and the second demand model representing the prediction of the second demand corresponding to second traffic are generated by the demand prediction unit 43, the demand model modification unit 44 modifies the first demand model so as to increase the non-allocated section in which no resource is allocated to either the first traffic or the second traffic. A "non-allocated section in which no resource is allocated to either the first traffic or the second traffic" is equivalent to "a non-traffic section in which there is neither first traffic nor second traffic". Here, the modification of the demand model includes processing for increasing a traffic volume per unit time while maintaining a total traffic volume and/or processing for delaying a time at which the communication section corresponding to the traffic demand appears.

For example, in the example illustrated in FIG. 4, a demand model representing generation of user traffic in the section from T1 to T2 is generated. Then, the demand model modification unit 44 executes modification to increase the traffic volume per unit time while maintaining the total traffic volume of the demand model. In the example illustrated in FIG. 7, a demand model corresponding to the traffic A and a demand model corresponding to the traffic B are generated. Then, the demand model modification unit 44 executes modification to delay the demand model corresponding to the traffic A. At this time, the demand model modification unit 44 modifies the demand model corresponding to the traffic A so that a shift amount of the demand model corresponding to the traffic A does not exceed the allowable delay for the NES control calculated for the traffic A.

The demand model modification unit 44 modifies the demand model according to the following policy. In the following description, it is assumed that a demand model A is generated for the traffic A and a demand model B is generated for the traffic B. It is assumed that the demand model B appears after the demand model A on the time axis. Further, it is assumed that the demand model A is modified without modifying the demand model B.
(1) The non-allocated section in which no resource is allocated to either the traffic A or the traffic B is expanded. Alternatively, a section in which the demand model A and the demand model B overlap each other on the time axis is lengthened.
(2) A traffic volume of the traffic A per unit time is increased while maintaining a total traffic volume of traffic A. Alternatively, a communication time of the traffic A is shortened while maintaining the total traffic volume of the traffic A.
(3) In a section in which the demand models A and B overlap each other, a sum of the traffic volumes of the traffic A and the traffic B does not exceed a physical upper limit of a communication capability of the communication system 1.
(4) A shift amount of the demand model A does not exceed the allowable delay for the NES control calculated for the traffic A.

The resource allocation unit 45 allocates a resource to traffic based on each demand model. At this time, the resource allocation unit 45 allocates a resource to the traffic for each slice. Accordingly, the resource allocation unit 45 allocates a resource to each piece of traffic with reference to the configuration information of each slice stored in the configuration information storage unit 32. For traffic for which the corresponding demand model has been modified by the demand model modification unit 44, a resource is allocated to the traffic based on the modified demand model. For traffic for which the corresponding demand model has not been modified by the demand model modification unit 44, a resource is allocated to the traffic based on the demand model generated by the demand prediction unit 43.

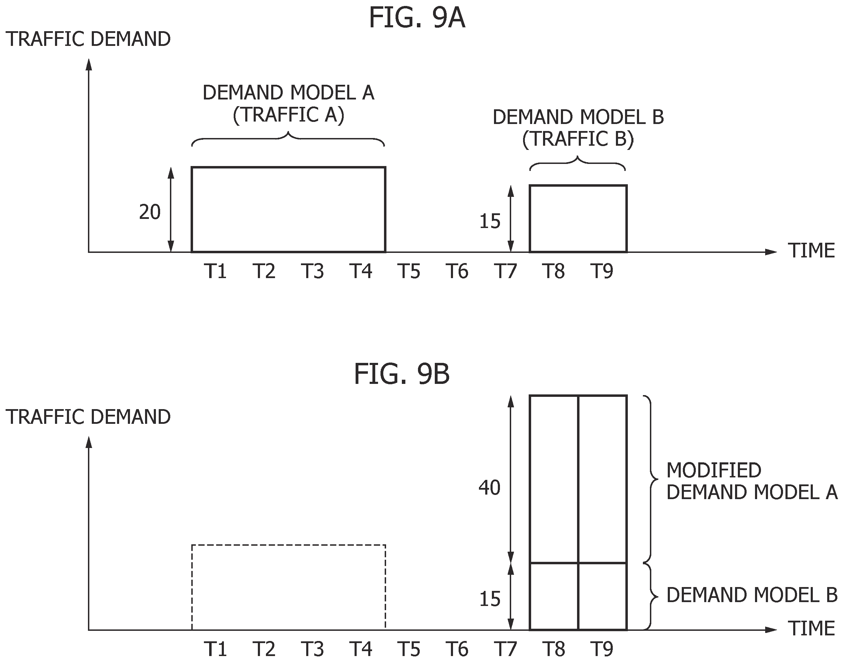

FIG. 9 illustrates an example of a process of allocating a resource to each piece of traffic based on the demand model. In this example, as illustrated in FIG. 9A, the demand prediction unit 43 generates the demand model A representing prediction of a demand corresponding to the traffic A and the demand model B representing the prediction of a demand corresponding to the traffic B. The demand model A indicates that the demand of the traffic A is "traffic volume=20" in a section from T1 to T4. The demand model B indicates that the demand of the traffic B is "traffic volume=15" in a section from T8 to T9.

The demand model modification unit 44 modifies the demand model A. At this time, the demand model modification unit 44 modifies the demand model A according to the policies (1) to (4) described above. As a result, the modified demand model A indicates that the demand of the traffic A is "traffic volume=40" in a section from T8 to T9.

The resource allocation unit 45 allocates a resource to each piece of traffic based on the demand model B and the modified demand model A. Specifically, a physical resource block corresponding to "resource=15" is allocated to the traffic B in the section of T8, and a physical resource block corresponding to "resource=15" is allocated to the traffic B in the section of T9. A physical resource block corresponding to "resource=40" is allocated to the traffic A in the section of T8, and a physical resource block corresponding to "resource=40" is allocated to the traffic A in the section of T9.

The resource control unit 46 sets a resource allocation plan by the resource allocation unit 45 in the O-DU 22b. Then, the O-DU 22b notifies the O-RU 23 of the resource allocation plan. The O-RU 23 processes a radio signal of each piece of traffic according to the notified resource allocation plan.

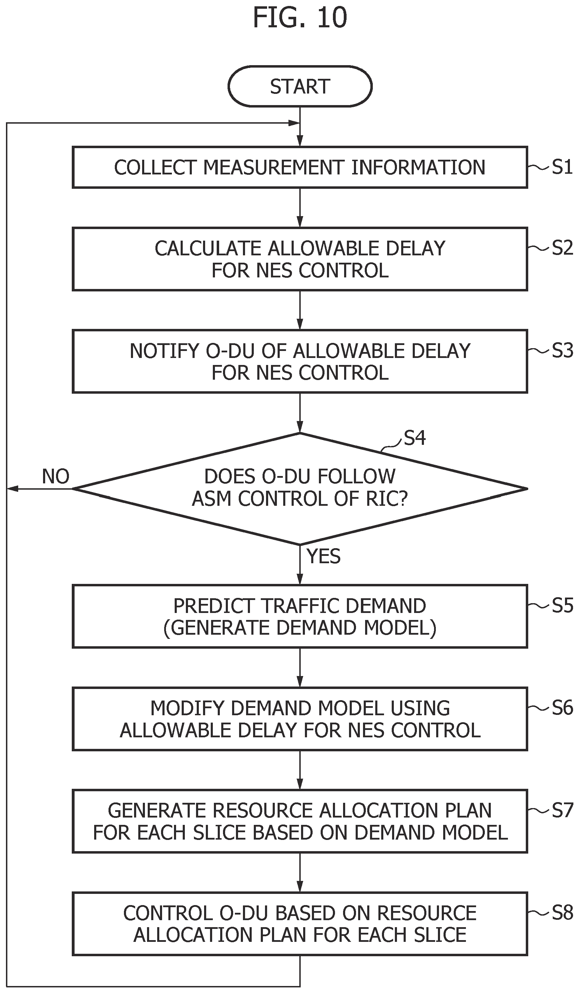

FIG. 10 is a flowchart illustrating an example of a communication control method according to an embodiment of the present invention. In this example, it is assumed that a learned AI/ML model predicting a traffic demand is deployed in the demand prediction unit 43. The slice configuration information stored in the configuration information storage unit 32 is given to the allowable delay calculation unit 42 and the resource allocation unit 45. The processing of S1 to S8 is repeatedly executed.

In S1, the measurement information collection unit 41 collects the measurement information from the O-CU 22a via the E2 interface. Here, the O-CU 22a measures a packet propagation delay time between the terminal UE and the UPF or a packet propagation delay time between the terminal UE and the O-CU 22a. The measurement information collection unit 41 collects at least information indicating the packet propagation delay time measured by the O-CU 22a.

In S2, the allowable delay calculation unit 42 calculates the allowable delay for the NES control in each slice (or each piece of traffic). As described above, the allowable delay for the NES control is calculated based on the allowable packet delay PDB, the packet propagation delay time, and the margin parameter designated for each slice. The allowable packet delay PDB is included in the slice configuration information stored in the configuration information storage unit 32. The packet propagation delay time is a maximum delay measurement value or an average delay measurement value, and is calculated from the measurement information collected by the measurement information collection unit 41. The margin parameter is determined in advance according to fluctuation of demand prediction by the AI/ML model.

In S3, the allowable delay notification unit 47 notifies the O-DU 22b of the allowable delay for the NES control calculated by the allowable delay calculation unit 42. An operation of the O-DU 22b will be described below.

In S4, the real time RIC 21 determines whether the O-DU 22b follows the ASM control by the RIC. It is assumed that whether the O-DU 22b follows the ASM control by the RIC is determined in advance. That is, information indicating whether the O-DU 22b follows the ASM control by the RIC is set in the real time RIC 21 or the SMO 10 in advance. Then, when the O-DU 22b follows the ASM control by the RIC, the real time RIC 21 executes the processing of S5 to S8.

In S5, the demand prediction unit 43 predicts a traffic demand for each slice to generate a demand model. The traffic demand is predicted based on, for example, a type and a data amount of user data to be transmitted to the terminal UE. At this time, the demand prediction unit 43 may predict the traffic demand in consideration of the measurement information collected by the measurement information collection unit 41. The demand model includes information indicating a communication section in which traffic is transmitted (or received) and information indicating a traffic volume per unit time in the communication section. The communication section may be represented by a communication start time and a communication end time.

In S6, the demand model modification unit 44 modifies at least one of the plurality of demand models generated in S5. For example, when two demand models close to each other are deployed on the time axis, the demand model deployed at a previous time is modified. In this case, the demand model modification unit 44 may increase the traffic volume per unit time while maintaining the total traffic volume of a previous demand model. The demand model modification unit 44 may execute modification to delay the previous demand model on the time axis so that the two demand models overlap each other. Here, the previous demand model is modified within a range in which the shift (that is, the delay) on the time axis with respect to the previous demand model does not exceed the allowable delay for the NES control calculated in S2.

In S7, the resource allocation unit 45 generates a resource allocation plan for each slice based on the demand model. At this time, when the demand model is modified in S6, the resource allocation plan is generated based on the modified demand model. The resource allocation plan may represent, for example, the number of physical resource blocks for each slice and each time slot.

In S8, the resource control unit 46 controls the O-DU 22b based on the resource allocation plan for each slice. At this time, the resource control unit 46 may set the resource allocation plan generated by the resource allocation unit 45 to the O-DU 22b. Then, the O-DU 22b notifies the O-RU 23 of the resource allocation plan. Then, the O-RU 23 processes the radio signal according to the notified resource allocation plan. The E2 node includes a reception unit that receives the resource allocation plan generated by the real time RIC 21, and a processing unit that processes each piece of traffic according to the resource allocation plan.

When the O-DU 22b does not follow the ASM control by the RIC (S4: No), execution of the processing of S5 to S8 by the real time RIC 21 is optional. In this case, the O-DU 22b may independently execute the ASM control. That is, when the real time RIC 21 notifies the O-DU 22b of the allowable delay for the NES control in S3, the O-DU 22b may execute the ASM control using the allowable delay for the NES control.

In this case, the O-DU 22b preferably includes the demand prediction unit 43, the demand model modification unit 44, and the resource allocation unit 45. The O-DU 22b generates a resource allocation plan based on the ASM control by executing the processing of S5 to S7. Then, the O-DU 22b gives an optional instruction to the O-RU 23 based on the resource allocation plan.

In the above-described example, the real time RIC 21 executes the ASM control, but the embodiment of the present invention is not limited to this configuration. For example, the non-real time RIC 11 mounted within the SMO 10 may execute ASM control as a communication control apparatus. In this case, the non-real time RIC 11 may include the measurement information collection unit 41, the allowable delay calculation unit 42, the demand prediction unit 43, the demand model modification unit 44, the resource allocation unit 45, the resource control unit 46, and the allowable delay notification unit 47 illustrated in FIG. 8.

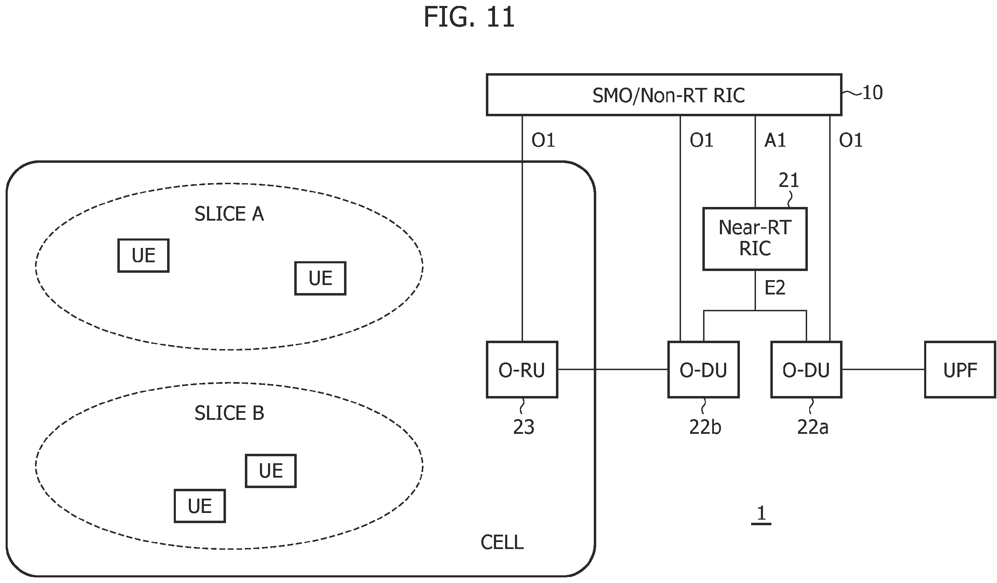

FIG. 11 illustrates a configuration of a communication system according to an example of the present invention. In this example, the slices A and B are set in a cell of the communication system 1. The slice A is configured as follows.
Type of traffic: Non-GBR
5QI: 6
Allowable packet delay PDB: 300 milliseconds
Service: video communication, streaming
The slice B is configured as follows.
Type of traffic: delay critical GBR
5QI: 86
Allowable packet delay PDB: 5 milliseconds
Service: V2X message

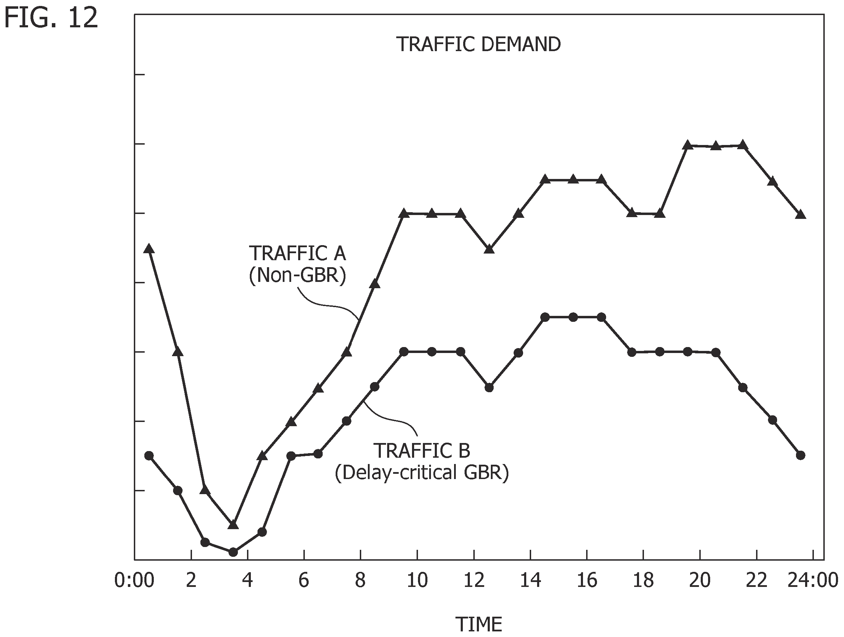

FIG. 12 illustrates an example of a traffic demand predicted in advance. This prediction represents a traffic demand from 0:00 to 24:00 and is made based on an actual traffic volume in the past or the like.

In this example, it is predicted that the traffic demand from 2:00 to 5:00 AM is small. Here, in a period of time in which the traffic demand is small, it is easy to shift the demand model on the time axis. Accordingly, the ASM control according to the embodiment of the present invention is easily executed in this period of time. However, in a period of time in which a traffic demand is very small (for example, from 3:00 to 4:00 AM), power consumption is sufficiently reduced only by the carrier/cell switch Off/On control of the related art.

Accordingly, the communication system 1 may execute the ASM control in a period of time in which the traffic demand is relatively small with reference to the prediction of the traffic demand. For example, the communication system 1 may execute the ASM control from 2:00 to 3:00 AM and from 4:00 to 5:00 AM.

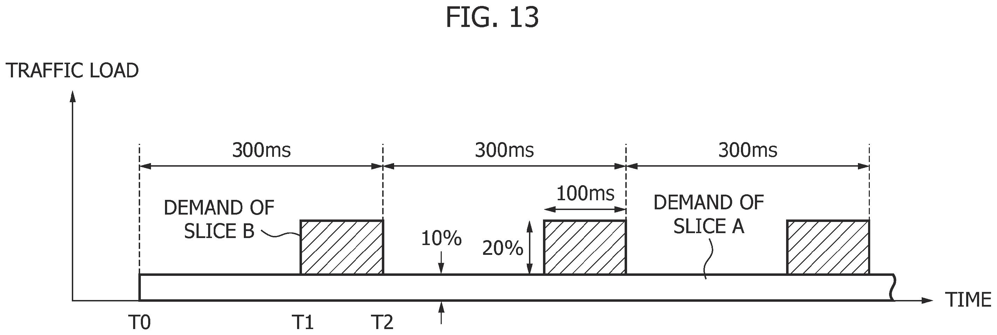

FIG. 13 illustrates an example of prediction of a traffic demand obtained by the demand prediction unit 43. In this example, the traffic demand of the slice A is continuous and is 10% of a transmission capacity of communication system 1. The traffic demand for the slice B occurs every 300 ms and the length of each communication section is 100 ms. The traffic demand in each communication section of the slice B is 20% of the transmission capacity of the communication system 1.

Here, a type of traffic in the slice A is a non-GBR, and the allowable packet delay PDB is large. Accordingly, the communication system 1 modifies the demand model of the slice A in the ASM control.

In S1 of FIG. 10, the measurement information collection unit 41 collects the measurement information indicating a packet propagation delay time of each slice. Then, an average delay measurement value of each slice is calculated. In this example, it is assumed that average delay measurement values of the slices A and B are each 10 milliseconds.

In S2 of FIG. 10, the allowable delay calculation unit 42 calculates the allowable delay for the NES control in the slice A. Here, it is assumed that the margin parameter β in consideration of fluctuation of the demand prediction using the AI/ML model is 10 milliseconds. Then, the allowable delay NES_D for the NES control in the slice A is calculated by the following formula.$NES_D = 300 -10 -10 = 280 \left[milliseconds\right]$

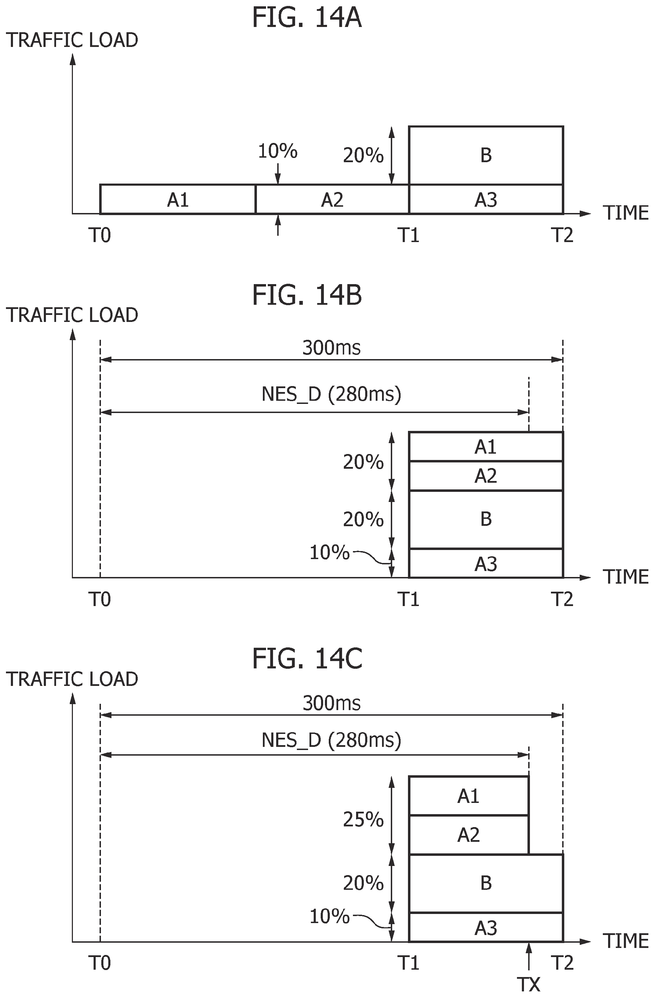

In S6 of FIG. 10, the demand model modification unit 44 modifies the demand model of the slice A illustrated in FIG. 13. In this example, as illustrated in FIG. 14A, in a section from T0 to T2, the demand for the slice A is 10% of the transmission capacity of the communication system 1. A1 to A3 illustrated in FIG. 4 form a demand model of the slice A. In a section from T1 to T2, the demand for the slice B is 20% of the transmission capacity of the communication system 1.

Here, when the demand model of the slice A is modified as illustrated in FIG. 14B, a section (that is, a non-traffic section) in which there is neither traffic of the slice A nor traffic of the slice B is maximized. In the case illustrated in FIG. 14B, the demand (A1 to A2) in the section from T0 to T1 is shifted (that is, delayed) to the section from T1 to T2. However, in this case, there is concern of the delay of the traffic of the slice A exceeding the allowable delay NES_D for the NES control. Accordingly, in the case illustrated in FIG. 14B, quality of service is not guaranteed.

Thus, the demand model modification unit 44 modifies the demand model of the slice A so that the delay of the traffic of the slice A does not exceed the allowable delay NES_D for the NES control. Specifically, as illustrated in FIG. 14C, the demand (A1 to A2) in the section from T0 to T1 is deployed in the section from T1 to TX. TX represents a time shifted by 280 milliseconds from time T0. The traffic demand of the slice A in the section from T1 to T2 illustrated in FIG. 14B is 30% of the transmission capacity of the communication system 1. On the other hand, a traffic demand of the slice A in the section from T1 to TX illustrated in FIG. 14C is 35% of the transmission capacity of the communication system 1.

In the case illustrated in FIG. 14C, the delay of the traffic of the slice A is equal to or less than the allowable delay NES_D for the NES control. Accordingly, the quality of the service is guaranteed. The non-traffic sections in which there is neither traffic of slice A nor traffic of the slice B are substantially the same in FIGS. 14B and 14C. Accordingly, power consumption reduction efficiency by the ASM control is substantially the same in FIGS. 14B and 14C.

In S7 of FIG. 10, the resource allocation unit 45 allocates a resource to each slice based on the modified demand model. The resource control unit 46 sets the resource allocation plan in the O-DU 22b in S8 of FIG. 10.

The O-RU 23 executes radio communication in response to an instruction given from the E2 node (here, the O-DU 22b). At this time, the O-RU 23 stops some functions of the radio circuit in the non-traffic section. Here, the non-traffic section is a non-allocated section in which no resource is allocated to user traffic. Accordingly, the O-RU 23 can stop the circuit that transmits or receives a radio signal in this section. In the example illustrated in FIGS. 13 to 14, at least a part of the radio circuit of the O-RU 23 is set to a sleep state in the section from T0 to T1. However, in practice, a turn-on period in which the radio circuit of the O-RU 23 transitions from the sleep state to a normal operation state and a turn-off period in which the radio circuit of the O-RU 23 transitions from the normal operation state to the sleep state occur.

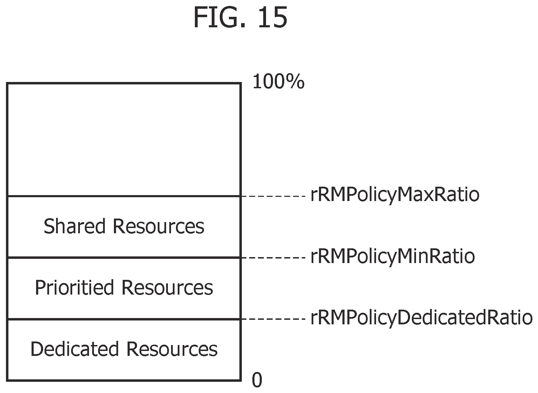

The O-DU 22b uses RRMPolicyRatio when the radio communication of the O-RU 23 is controlled. As illustrated in FIG. 15, RRMPolicyRatio includes three parameters. rRMPolicyDedicatedRatio represents a ratio of a resource reserved exclusively regardless of whether a service is used. rRMPolicyMinRatio represents a resource that can be preferentially used when a service is executed. rRMPolicyMaxRatio represents an upper limit of a resource available for the corresponding service. Then, rRMPolicyMaxRatio is determined as follows based on the demand model illustrated in FIG. 14C.
Slice A:
   section from T0 to T1: 0%
   section from T1 to TX: 35%
   section from TX to T2: 10%
Slice B:
   section from T0 to T1: 0%
   section from T1 to TX: 20%
   section from TX to T2: 20%

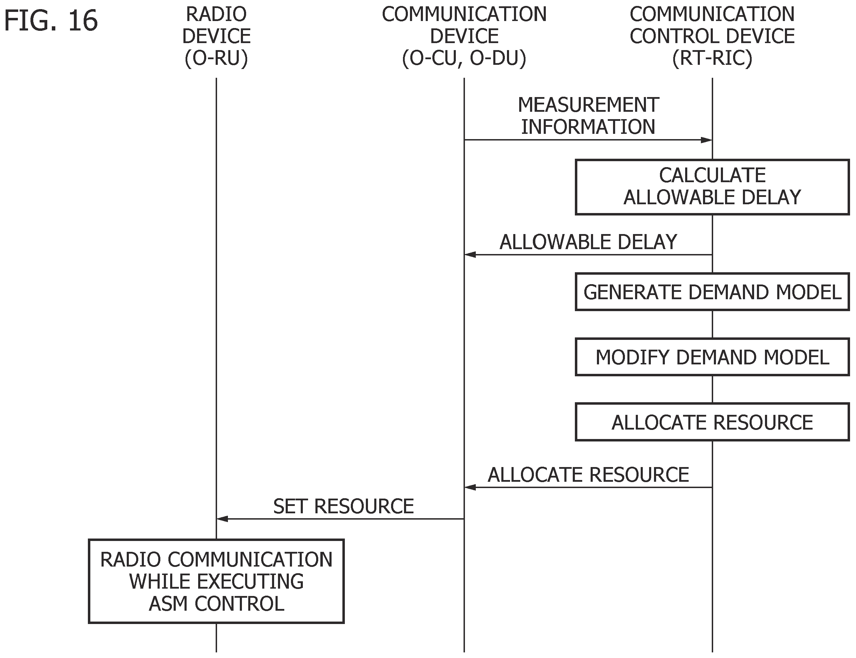

FIG. 16 illustrates an example of a sequence of communication control according to an embodiment of the present invention. In this example, a communication apparatus (O-CU or O-DU) transmits measurement information indicating a measurement value of packet propagation delay to a communication control apparatus (RT-RIC). The communication control apparatus calculates allowable delay for the NES control based on the allowable packet delay and the measurement information for each slice. The communication control apparatus transmits the allowable delay for the NES control to the communication apparatus optionally.

The communication control apparatus executes S5 to S7 of FIG. 10. That is, the communication control apparatus generates a demand model representing a traffic demand for each slice. The communication control apparatus modifys the demand model using the allowable delay for the NES control so that the non-traffic section (that is, the resource non-allocation section) becomes large. The communication control apparatus generates a resource allocation plan by allocating a resource to each slice or each piece of traffic based on the modifyed demand model. Then, the communication control apparatus notifies the communication apparatus of the resource allocation plan.

The communication apparatus sets a resource to be used by the radio apparatus (O-RU) according to the resource allocation plan. The radio apparatus executes radio communication using the set resource. At this time, the radio apparatus reduces power consumption by stopping at least a part of the radio circuit in the non-traffic section (that is, the resource non-allocation section) by the ASM control. As described above, according to the communication control according to the embodiment of the present invention, since the non-traffic section is expanded by modifying the demand model, the power saving efficiency is improved.

### <Hardware Configuration>

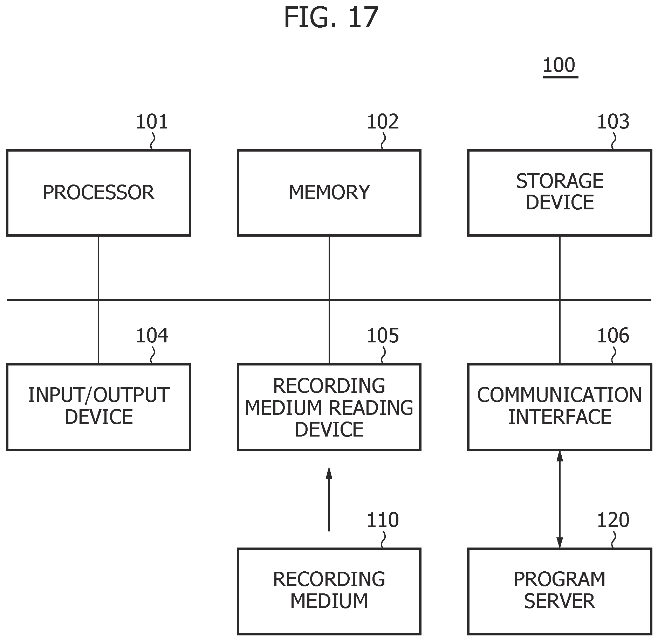

FIG. 17 illustrates an example of a hardware configuration of the real time RIC 21 that operates as the communication control apparatus. The communication control apparatus is realized by a computer 100 that includes a processor 101, a memory 102, a storage apparatus 103, an input/output apparatus 104, a recording medium reading apparatus 105, and a communication interface 106.

The processor 101 realizes the real time RIC 21 by executing a communication control program stored in the storage apparatus 103. Here, the communication control program includes various xApps illustrated in FIG. 3. Accordingly, when the processor 101 executes this communication control program, the functions of the measurement information collection unit 41, the allowable delay calculation unit 42, the demand prediction unit 43, the demand model modification unit 44, the resource allocation unit 45, the resource control unit 46, and the allowable delay notification unit 47 illustrated in FIG. 8 are provided. The memory 102 is used as a work area of the processor 101. The storage apparatus 103 stores the above-described communication control program and other programs.

The input/output apparatus 104 may include an input apparatus such as a keyboard, a mouse, a touch panel, or a microphone. The input/output apparatus 104 may include an output apparatus such as a display apparatus or a speaker. The recording medium reading apparatus 105 may acquire data and information recorded in the recording medium 110. The recording medium 110 is a removable recording medium that is detachable from the computer 100. The recording medium 110 is realized by, for example, a semiconductor memory, a medium that records a signal through an optical action, or a medium that records a signal through a magnetic action. The communication control program may be provided from the recording medium 110 to the computer 100. The communication interface 106 provides a function of connecting to a network. When the communication control program is stored in the program server 120, the computer 100 may acquire the communication control program from the program server 120.

### REFERENCE SIGNS LIST

- 10: SMO (Service Management Orchestration)
- 11: Non-Real Time RIC
- 12: Near-Real Time RIC
- 22: E2 node
- 22a:: O-CU (O-RAN Central Unit)
- 22b:: O-DU (O-RAN Distributed Unit)
- 23: O-RU (O-RAN Radio Unit)
- 41: MEASUREMENT INFORMATION COLLECTION UNIT
- 42: ALLOWABLE DELAY CALCULATION UNIT
- 43: DEMAND PREDICTION UNIT
- 44: DEMAND MODEL MODIFICATION UNIT
- 45: RESOURCE ALLOCATION UNIT
- 46: RESOURCE CONTROL UNIT
- 47: ALLOWABLE DELAY NOTIFICATION UNIT

## Claims

1. A communication control apparatus comprising:
a demand predictor configured to generate a first demand model representing prediction of a first demand corresponding to first traffic and a second demand model representing prediction of a second demand corresponding to second traffic;
a calculator configured to calculate allowable delay of the first traffic based on quality requested by the first traffic;
a modificator configured to modify the first demand model within a range in which a shift amount of the first demand model does not exceed the allowable delay so as to increase a non-allocated section in which no resource is allocated to either the first traffic or the second traffic;
a resource allocator configured to allocate a first resource to the first traffic based on the modified first demand model and allocate a second resource to the second traffic based on the second demand model; and
a resource controller configured to notify a communication apparatus processing the first traffic and the second traffic of the first resource and the second resource.

2. The communication control apparatus according to claim 1, wherein the modificator delays a period in which the first demand model is deployed on a time axis.

3. The communication control apparatus according to claim 1, wherein the modificator increases a traffic demand represented by the first demand model.

4. The communication control apparatus according to claim 1, further comprising:
a collector configured to collect measurement information indicating a propagation delay time of the first traffic measured by the communication apparatus,
wherein the calculator calculates allowable delay of the first traffic based on quality requested by the first traffic and a propagation delay time indicated by the measurement information.

5. The communication control apparatus according to claim 1, wherein the modificator modifies the first demand model so that a sum of the first demand and the second demand does not exceed a predetermined upper limit in a section in which the first and the second demand models overlap each other.

6. The communication control apparatus according to claim 5, wherein the modificator modifies the first demand model such that a sum of the first demand and the second demand approaches the upper limit in a section in which the first and the second demand models overlap each other.

7. A communication apparatus comprising:
a receiver configured to receive resource allocation information generated by a communication control apparatus; and
a processor configured to process first traffic and second traffic in accordance with the resource allocation information;
wherein the communication control apparatus includes
a demand predictor configured to generate a first demand model representing prediction of a first demand corresponding to the first traffic and a second demand model representing prediction of a second demand corresponding to the second traffic;
a calculator configured to calculate allowable delay of the first traffic based on quality requested by the first traffic;
a modificator configured to modify the first demand model within a range in which a shift amount of the first demand model does not exceed the allowable delay so as to increase a non-allocated section in which no resource is allocated to either the first traffic or the second traffic; and
a resource allocator configured to allocate a first resource to the first traffic based on the modified first demand model and allocate a second resource to the second traffic based on the second demand model,
wherein the processor processes the first traffic and the second traffic in accordance with the resource allocation information representing the first resource and the second resource.

8. A communication system comprising:
a communication apparatus configured to process first traffic and second traffic; and
a communication control apparatus configured to control the communication apparatus,
wherein the communication control apparatus includes
a demand predictor configured to generate a first demand model representing prediction of a first demand corresponding to the first traffic and a second demand model representing prediction of a second demand corresponding to the second traffic;
a calculator configured to calculate allowable delay of the first traffic based on quality requested by the first traffic;
a modificator configured to modify the first demand model within a range in which a shift amount of the first demand model does not exceed the allowable delay so as to increase a non-allocated section in which no resource is allocated to either the first traffic or the second traffic; and
a resource allocator configured to allocate a first resource to the first traffic based on the modified first demand model and allocate a second resource to the second traffic based on the second demand model,
wherein the communication apparatus processes the first traffic and the second traffic using the first resource and the second resource.
